**Europäisches Patentamt**

**European Patent Office**

**Office européen des brevets**

(11) Publication number: **0 118 155**
**B1**

## (12) EUROPEAN PATENT SPECIFICATION

(45) Date of publication of patent specification: **19.10.88**

(51) Int. Cl.⁴: **F 16 H 1/445, B 60 K 17/34**

(21) Application number: **84200265.1**

(22) Date of filing: **24.02.84**

(54) Automatic control device for controlling the lock of a differential.

(30) Priority: **03.03.83 IT 6724183**

(43) Date of publication of application:
**12.09.84 Bulletin 84/37**

(45) Publication of the grant of the patent:
**19.10.88 Bulletin 88/42**

(84) Designated Contracting States:
**DE FR GB IT SE**

(56) References cited:
**WO-A-82/01354**
**DE-A-2 164 324**
**FR-A-2 280 523**
**US-A-2 922 482**
**US-A-3 845 671**

**Zahnradgetriebe, J. Looman, 234-237,**
**Springer-Verlag 1970**

(73) Proprietor: **ITALDESIGN S.p.A.**
**Via A.Grandi 11**
**I-10024 Moncalieri (Torino) (IT)**

(72) Inventor: **Candellero, Giovanni**
**Via S. Marino, 21**
**I-10134 Torino (IT)**

(74) Representative: **Lotti, Giorgio**
**c/o Ing. Barzanò & Zanardo Milano S.p.A.**
**Via Cernaia 20**
**I-10122 Torino (IT)**

Courier Press, Leamington Spa, England.

## Description

The invention relates to an automatic control device for controlling the lock of a differential.

Among the various types of differential lock devices we remember, for example, a device with manual insertion at will of the driver, comprising a slidable grooved sleeve which rigidly connects to one another the two axel shafts of the driving wheels so as to render inoperative the differential (Zahnradgetriebe, J. Looman, 1970; p. 235, 236); alternatively, the sleeve, when sliding, may lock the planetary gears on their own axes or one of the crown wheels to the spider box thereby still obtaining the same result, i.e. the disactivation of the differential. It is obvious that all these systems, being manual and entrusted to the discretion of the driver, give rise first of all to difficulties in the insertion and then may remain inserted even when their use is not necessary, with the consequence of damages to the vehicle because of overcharges due to the power distribution.

In other cases a selflocking differential is used provided with a series of pins or radially sliding rollers, inserted into the driving member of the differential, or clutch discs are inserted between the elements rigidly connected to the crown wheels and the spider. In the first case, when one of the two driven elements tends to accelerate relative to the other, the pins move radially by following the undulations of the profiles of the driven elements thereby transmitting different torques. In the second case, when a certain difference in the speed of the two axel shafts is exceeded, a periodical intervention of the clutches is produced with an intensity which is as greater as higher is the rotation speed of the pivots of the planetary gears.

The selflocking differentials of this type have the disadvantage consisting in that they imply pre-established locking values and operate even in conditions in which their intervention is not required.

Another device is the differential with viscous clutch lock which takes advantage of the action of viscous forces proportional to the speed variation between the input and the output of the differential; in this case the transmitted torque is affected by the temperature of the viscous element, and moreover it is impossible to adjust the locking degree, and since there is no operation threshold the lock intervenes always, even in cases in which such intervention is not necessary, as for example in case of very sharp curves.

The object of the invention is to provide an automatic control device for controlling the lock of a differential having the particular advantage of to become operating in an automatic manner only when certain conditions arise, i.e. for certain speed difference values between the input and the output of the differential.

The device proposed allows transferring the torque onto the wheel in conditions of adhesion, thus ensuring the necessary propulsive thrust for the vehicle. In addition, the device proposed is simple to manufacture and can be mounted on vehicles which utilize the transmission on two or all four wheels, and in this second case, with a central differential. Finally, the proposed device does not give rise to serious problems as regards either the installation or the maintenance, unlike the analogous devices utilized at present time.

For these and further objects which will be better understood later, the invention proposes to provide an automatic control device for controlling the lock of a differential as defined in claim 1 and 2 respectively. The features as defined in the respective preamble are known from US—A—3845671.

The subject of the invention will now be described with reference to the accompanying drawings, in which:

Figure 1 is a diagrammatic sectional view of a differential provided with the device according to the invention;

Figure 2 is a block diagram of the device;

Figure 3 is a diagram of the hydraulic circuit utilized;

Figure 4 is a diagrammatic sectional view of a group of two differentials and a central differential, utilized on vehicles with four driving wheels, utilizing the device according to the invention;

Figure 5 is a block diagram of the device utilized in the technical solution shown in Figure 4;

Figures 6 and 7 show two alternative technical solutions of the hydraulic circuit used for the technical solution shown in Figure 4.

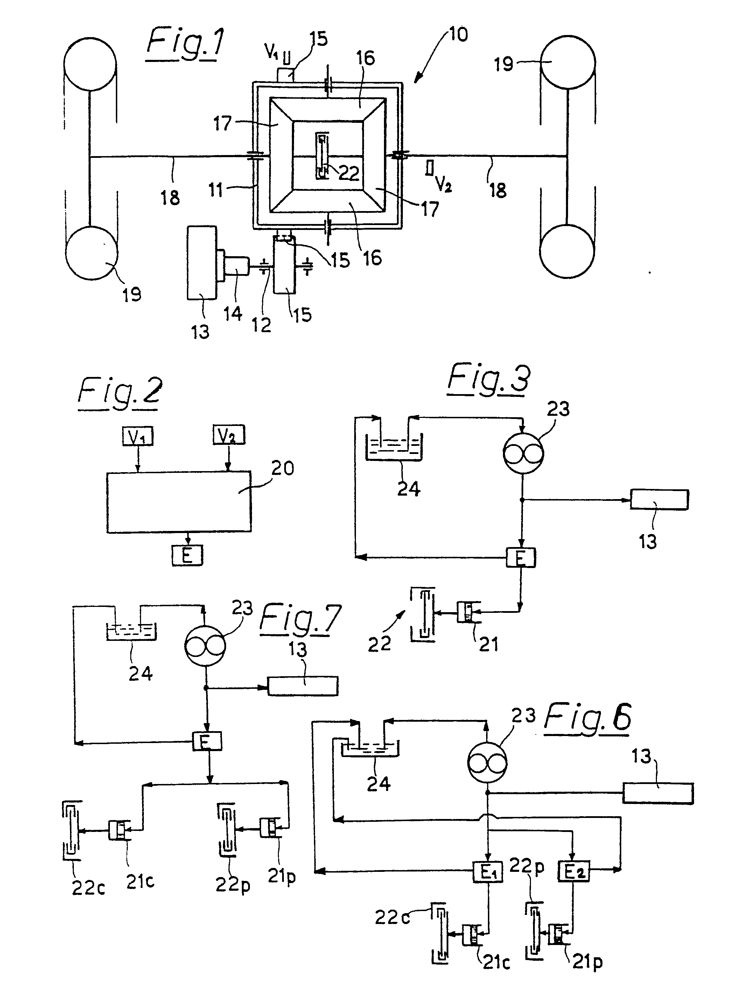

Figure 1 is a diagrammatic representation of a conventional differential 10 in which a spider box 11 receives the motion from a driving shaft 12 of a motor 13 through a gearbox 14 and a gear 15 as an input member.

The box 11 encloses planet wheels 16 meshing with crown wheels 17 keyed on axle shafts 18 of wheels 19.

According to the invention, a sensor $V_1$ for sensing the speed of the input member 15 of the differential is mounted in register with the gear 15, and a sensor $V_2$ sensing the speed of the driving element of the differential is mounted in register with an axle shaft 18.

As can be seen from Figure 2, the data detected by the sensors $V_1$ and $V_2$ are supplied to a microprocessor (comparator means) 20 which in its turn controls an electrovalve E whose function consists in actuating an operating cylinder 21 (Figure 3) of a differential lock clutch 22 (Figures 1 and 3). By way of example, the hydraulic circuit (Figure 3) comprises a conventional lubrication oil carter 24 of the motor 13, provided with a pump 23, and into which there is inserted the electrovalve E which, as said before, controls the operating cylinder 21 of the clutch 22 inserted between the crown wheels 17 of the differential.

The operation of the device is as follows: when the difference between the speed of the input element and the speed of the driven element is higher than or equal to a predetermined value A, the said activation threshold, i.e. in formula

$|V_1-V_2| \geqslant A$, the microprocessor 20 which processes said data sensed by the respective sensor $V_1$ and $V_2$, supplies current to the electrovalve E which introduces oil under pressure into cylinder 21 which inserts the clutch 22, thus locking the differential.

The difference $V_1-V_2$ is in absolute value, so that a single sensor $V_2$ may be mounted on an axle shaft 18 instead of a sensor for each axle shaft; thus, a value $V_1-V_2$ is obtained independently from whether the right-hand wheel or the left-hand wheel is slipping.

Obviously, when

$$|V_1-V_2| \leqslant (A-\varepsilon),$$

wherein $\varepsilon$ is defined as threshold between the opening and the closure of the clutch (delay), the system is prepared for taking off current from the electrovalve E and therefore, the clutch 22 is disconnected and thus activates again the differential. Accordingly, the device automatically becomes operating when certain conditions arise, i.e. for certain values of $\Delta V$ between the input and the output of the differential; it will be up to the manufacturer and the designer to dimension the microprocessor and to calculate the values of A (activation threshold) and $\varepsilon$ (delay threshold) in order that the device becomes operating only under determined operation conditions of the vehicle, namely of the kind of the slipping of a wheel, but only when the conditions are such as to require the lock of the differential.

It is also possible to subject the degree of locking to the $\Delta V$ by means of a continuous series of pressure pulses having the duration $\Delta t$ (t=time), to which corresponds a certain pressure P onto the cylinder 21 which controls the clutch closure; the value of P will depend on the value of $\Delta t$ and $\Delta t_1$ (interval between two successive pressure pulses).

Generally, with this system it is possible to program different types of actuation of the differential lock (for example the lock in connection with the position of the brake pedal).

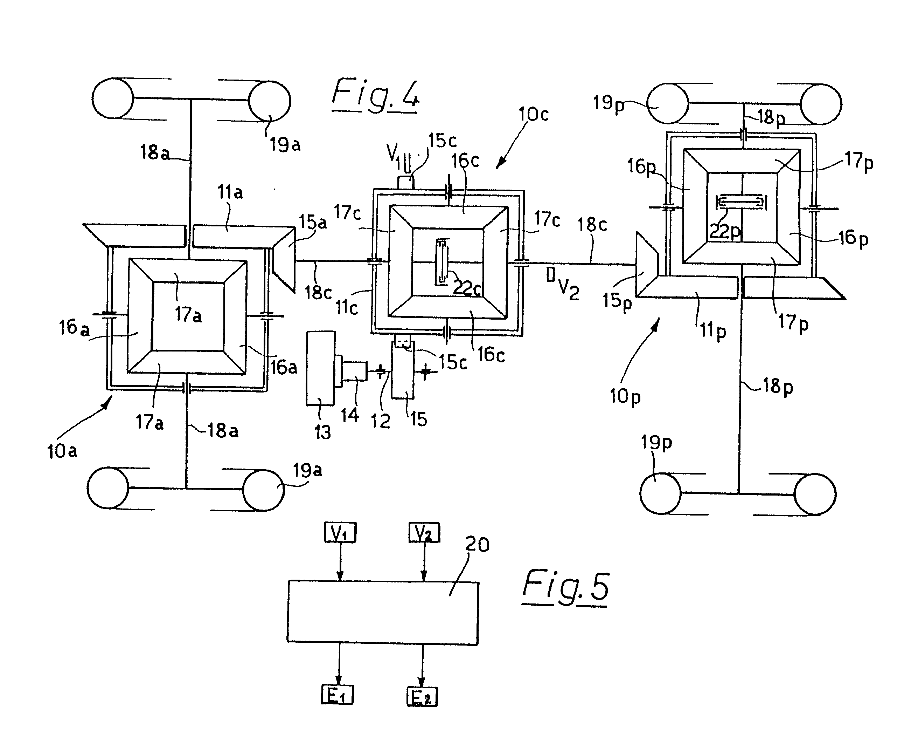

The more general technical solution shown in Figures 1, 2 and 3 may be applied, for example, to a vehicle with four driving wheels with a central differential. This technical solution is diagrammatically shown in Figure 4 in which three differentials $10_a$, $10_c$, $10_p$, i.e. front, central and back differentials, respectively, can be seen. The common reference numbers of these three differentials and that of the technical solution of Figure 1 have as the only difference the letter a, c and p which indicates frontal, central and back. In this case, sensor $V_1$ is applied to input member of the central differential $10_c$, while sensor $V_2$ is applied to driven element $18_c$ of the central differential connected to back axle $18_p$.

In this solution, the microprocessor 20 verifies the inequality $V_1 \gtrless V_2$; in fact, two cases may take place, namely $V_2 > V_1$ and therefore a slipping of the back carriage, or $V_1 > V_2$ and therefore a slipping of the forecarriage.

In the first case ($V_2 > V_1$), the microprocessor 20 operates according to the logic $|V_2-V_1| \geqslant B$ (wherein B is the activation threshold as A in the case of Figure 1, but with a different value), so that current is supplied to electrovalves $E_1$ and $E_2$ of the circuit shown in Figures 5 and 6, which supply oil under pressure to respective cylinders $21_c$ and $21_p$ which close clutch $22_c$ and $22_p$, thereby locking the central differential $10_c$ and the back differential $10_p$, respectively. When

$$|V_2-V_1| \leqslant (B-\varepsilon_B),$$

$\varepsilon_B$ being the delay threshold, i.e. there is an acceptable slipping of the back carriage, the current is taken off from the electrovalves $E_1$ and $E_2$ with the consequent opening of the clutches $22_c$ and $22_p$ and reactivation of the central differential $10_c$ and the back differential $10_p$.

In the second case ($V_1 > V_2$), in which the forecarriage slips, the microprocessor 20 operates in accordance with the logic $|V_1-V_2| \geqslant A$ so that current is supplied to the electrovalve $E_1$ which, through the cylinder $21_c$, activates the clutch $21_c$, thereby locking the central differential $10_c$. In case of an acceptable slipping of the forecarriage, i.e.

$$|V_1-V_2| \leqslant (A-\varepsilon_A),$$

$\varepsilon_A$ being the delay threshold, current is taken off from the electrovalve $E_1$ with consequent opening of the clutch $22_c$ and reactivation of the central differential $10_c$.

Resuming the functions, the microprocessor 20 verifies the inequalities $V_1 \gtrless V_2$ and in accordance with the two cases:

First case
$V_2 > V_1$ (the back carriage slips) the microprocessor acts in accordance with the logic
$|V_2-V_1| \geqslant B \rightarrow$ closes the clutches $22_c$ and $22_p$ locking the respective differentials
$|V_2-V_1| \geqslant (B-\varepsilon) \rightarrow$ opens the clutches $22_c$ and $22_p$, thus releasing the respective differentials.

Second case
$V_1 > V_2$ (the forecarriage slips) the microprocessor acts in accordance with the logic
$|V_1-V_2| \geqslant A \rightarrow$ closes the clutch $22_c$ thus locking the central differential
$|V_1-V_2| \leqslant (A-\varepsilon) \rightarrow$ opens the clutch $22_c$ thus releasing the central differential.

In an alternative technical solution of the circuit represented in Figure 7, the electrovalve E is single, so that, depending on the existing conditions described hereinabove and namely $|V_1-V_2| \geqslant A$ (slipping of the forecarriage) or $|V_2-V_1| \geqslant B$ (slipping of the back carriage) the microprocessor 20 will be adjusted so as to detect whether the first or the second situation is taking place in relation to the two threshold values A or B and will supply oil under pressure to the cylinders $21_c$ and $21_p$ in order to close the clutches $22_c$ and $22_p$. Once the intervention condition has been terminated, i.e. in the situation

$$| V_1 - V_2 | \leqslant (A - \varepsilon_A) \text{ or } | V_2 - V_1 | \leqslant (B - \varepsilon_B)$$

respectively current will be disinserted from the electrovalve E with consequent opening of the clutches $22_c$ and $22_p$.

The example of only two sensors $V_1$ and $V_2$ has been cited, but it is understood that these sensors may be even more than two and mounted, for example, on both driven axle shafts, in the case of the single differential for a traction on only two wheels, or on both axle shafts connected to the two front and back differentials in the case of a traction on all four wheels.

## Claims

1. An automatic control device for controlling lock of a differential having two crown wheels (17) for driving wheels (19), said device comprises a sensor means $(V_1)$ for sensing speed of an input member (15) of the differential (10), a sensor means $(V_2)$ for sensing speed of one of said crown wheels and a comparator means (20) for comparing the values detected by the sensors $(V_1, V_2)$, and for activating a differential locking member (22) when the difference between said values exceeds a threshold of activation of said lock member (22) which is a clutch actuated by a cylinder (21) and controlled by said comparator means (20) formed by a microprocessor, characterized in that the clutch (22) is inserted between said two crown wheels (17) each being keyed on a respective axle (18) of said wheels (19), so that the clutch (22) locks directly said axles (18) and in that said cylinder (21) is actuated by an electrovalve (E), inserted into the lubrication circuit of the motor.

2. An automatic device for controlling lock of a differential in a vehicle with four driving wheels in which a central differential $(10_c)$ is connected by means of two crown wheels $(17_c)$ and respective axles $(18_c)$ to a front and a back differential $(10_a, 10_p$, each of the front and back differential having axles $(18_a, 18_p)$ for driving said wheels, said device comprises a sensor means $(V_1)$ for sensing speed of an input member (15) of the central differential $(10_c)$ and a sensor means $(V_2)$ positioned on that axle $(18_c)$ which connects the central differential $(10_c)$ to the back differential $(10_p)$; a comparator means (20) for comparing the values sensed by the sensors $(V_1, V_2)$ and for activating a locking member (22) in form of a clutch for locking said central differential, when the difference between said values exceeds an activation threshold of said clutch $(22_c)$, which is actuated by a cylinder $(21_c)$ and controlled by said comparator means (20) formed by a microprocessor, characterized in that the clutch $(22_c)$ is inserted between the crown wheels $(17_c)$ of the central differential $(10_c, 10_p)$ and in that a further clutch $(22_p$ is inserted between crown wheels $(17_p)$ of the back differential $(10_p)$, all said crown wheels $(17_c, 17_p)$ being keyed on the respective axles $(18_c, 18_p)$ so that the clutches $(22_p, 22_c)$ lock directly said axles $(18_c, 18_p)$, concomitantly or separately,

and in that each clutch is actuated by a respective cylinder $(21_p, 21_c)$ actuated by electrovalves, inserted into the lubrication circuit of the motor.

## Patentansprüche

1. Eine automatische Steuereinrichtung zum Sperren eines Differentials mit zwei Achswellenkegelraedern (17) fuer Antriebsraeder (19); die o.g. Einrichtung besteht aus einem Sensor $(V_1)$ zum Wahrnehmen der Geschwindigkeit eines Entrittsglieds (15) des Differentials (10), einem Sensor $(V_2)$ zum Wahrnehmen der Geschwindigkeit eines der o.g. Achswellenkegelraeder und einem Komparator (20) zum Vergleich der von den Sensoren $(V_1, V_2)$ uebergenommenen Werte und zur Aktivierung eines Sperrglieds des Differentials (22), wenn der Unterschied zwischen den o.g. Werten die Aktivierungsschwelle des o.g. Sperrglieds (22) ueberschreitet das aus einer Kupplung besteht, die von einem Zylinder (21) betaetigt und vom o.g. aus einem Mikroprozessor bestehenden Komparator (20) gesteuert wird; dadurch gekennzeichnet, dass die Kupplung (22) zwischen den zwei Achswellenkegelraedern (17) eingesetzt ist, jedes von ihnen ist auf der entsprechenden Achse (18) der o.g. Raeder (19) festgekeilt, so dass die Kupplung (22) direkt die o.g. Achsen (18) arretiert und dadurch gekennzeichnet, dass der o.g. Zylinder (21) durch ein in der Schmieranlage des Motors eingesetztes Elektroventil, betaetigt wird.

2. Eine automatische Steuereinrichtung zum Sperren des Differentials eines Vierradantriebfahrzeugs, wobei ein Zentraldifferential $(10_c)$ ueber zwei Achswellenkegelraede $(17_c)$ und die entsprechenden Achsen $(18_c)$, mit einem Vorder- u. Hinterdifferential $(10_c, 10_p)$ verbunden ist, jedes von ihnen hat eine Achse $(18_a, 18_p)$ zur Lenkung der o.g. Raeder; die o.g. Einrichtung besteht aus einem Sensor $(V_1)$ zum Wahrnehmen der Geschwindigkeit eines Eintrittsglieds (15) des Zentraldifferentials $(10_c)$ und einem Sensor $(V_2)$, der auf jene Achse $(18_c)$, die den Zentraldifferential $(10_c)$ mit dem Hinterdifferential $(10_p)$ verbindet, positioniert ist; einem Komparator (20) zum Vergleich der von den Sensoren $(V_1, V_2)$ uebergenommenen Werte und zur Aktivierung eines Sperrglieds (22) in Form einer Kupplung zum Sperren des o.g. Zentraldifferentials, wenn der Unterschied zwischen den o.g. Werten die Aktivierungsschwelle der o.g. Kupplung $(22_c)$ ueberschreitet, die von einem Zylinder $(21_c)$ betaetigt und vom o.g. aus einem Mikroprozessor bestehenden Komparator (20) gesteuert wird; dadurch gekennzeichnet, dass die Kupplung $(22_c)$ zwischen den Achswellenkegelraedern $(17_c)$ des Zentraldifferentials $(10_c, 10_p)$ eingesetzt ist und, dass eine Zusatzkupplung $(22_p)$ zwischen den Achswellenkegelraedern $(17_p)$ des Hinterdifferentials $(10_p)$ eingesetzt ist; alle o.g. Achswellenkegelraeder $(17_c, 17_p)$ sind auf den entsprechenden Achsen $(18_c, 18_p)$ festgekeilt, so dass die Kupplungen $(22_p, 22_c)$ direkt die o.g. Achsen $(18_c, 18_p)$ gleichzeitig oder separat arretieren; dadurch gekennzeichnet, dass jede Kupplung vom ent-

sprechenden Zylinder ($21_p$, $21_c$) betaetigt wird, der seinerseits, durch die in der Schmieranlage des Motors eingesetzten Elektroventile angetrieben ist.

**Revendications**

1. Un dispositif de commande automatique pour le blocage d'un différentiel à deux engrenages planétaires (17) pour roues motrices (19); le dispositif susdit comprend un capteur ($V_1$) pour percevoir la vitesse d'un élément d'entrée (15) du différentiel (10), un capteur ($V_2$) pour percevoir la vitesse d'un des engrenages planétaires susdits et un comparateur (20) pour comparer les valeurs détectées par les capteurs ($V_1$, $V_2$) et pour activer un élément de blocage du différentiel (22) lorsque la différence entre les valeurs susdites dépasse le seuil de mise en activité de l'élément de blocage susdit (22) qui se compose d'un embrayage actionné par un cylindre (21) et commandé par le comparateur susdit (20) constitué par un microprocesseur, caractérisé du fait que l'embrayage (22) est inséré entre les deux engrenages planétaires susdits (17), chacun desquels est claveté sur l'axe respectif (18) des roues susdites (19) de sorte que l'embrayage (22) bloque directement les axes susdits (18) et caractérisé du fait que le cylindre susdit (21) est actionné par une électrovanne (E) insérée dans le système de graissage du moteur.

2. Un dispositif automatique de commande du blocage d'un différentiel pour un véhicule à quatre roues motrices où un différentiel central ($10_c$) est joint, au moyen de deux engrenages planétaires ($17_c$) et des axes respectifs ($18_c$), à un différentiel avant et à un différentiel arrière ($10_a$, $10_p$) chacun desquels a un axe ($18_a$, $18_p$) pour diriger les roues susdites; le dispositif susdit comprend un capteur ($V_1$) pour percevoir la vitesse d'un élément de puissance (15) du différentiel central ($10_c$) et un capteur ($V_2$) positionné sur l'axe ($18_c$) qui joint le différentiel central ($10_c$) au différentiel arrière ($10_p$); un comparateur (20) pour comparer les valeurs détectées par les capteurs ($V_1$, $V_2$) et pour activer un élément de blocage (22) en forme d'embrayage pour le blocage du différentiel central susdit lorsque la différence entre les valeurs susdites dépasse le seuil de mise en activité de l'embrayage susdit ($22_c$) qui est actionné par un cylindre ($21_c$) et commandé par le comparateur susdit (20) composé par un microprocesseur; caractérisé du fait que l'embrayage ($22_c$) est inséré entre les engrenages planétaires ($17_c$) du différentiel central ($10_c$, $10_p$) et qu'un embrayage supplémentaire ($22_p$) est inséré entre les engrenages planétaires ($17_p$) du différentiel arrière ($10_p$); tous les engrenages planétaires susdits ($17_c$, $17_p$) sont clavetés sur les axes respectifs ($18_c$, $18_p$) de sorte que les embrayages ($22_p$, $22_c$) bloquent directement les axes susdits ($18_c$, $18_p$) concommittament ou séparément; caractérisé du fait que chaque embrayage est actionné par le cylindre respectif ($21_p$, $21_c$) actionné, à son tour, par des électrovannes insérées dans le système de graissage du moteur.

*Fig.1*

*Fig.2*

*Fig.3*

*Fig.7*

*Fig.6*

_Fig.4_

_Fig.5_